## Europäisches Patentamt
## European Patent Office
## Office européen des brevets

(11) Publication number: **0 080 894**
**A2**

# EUROPEAN PATENT APPLICATION

(21) Application number: 82306363.1

(22) Date of filing: 30.11.82

(51) Int. Cl.³: **G 21 C 3/30**

(30) Priority: 01.12.81 GB 8136224

(43) Date of publication of application:
08.06.83 Bulletin 83/23

(84) Designated Contracting States:
AT BE CH DE FR IT LI LU NL SE

(71) Applicant: FAIREY ENGINEERING LIMITED
Cranford Lane
Heston Hounslow Middlesex TW5 9NQ(GB)

(72) Inventor: Meewezen, Johan Christiaan
4 Parsonage Road Heaton Moor
Stockport Cheshire(GB)

(74) Representative: Jennings, Nigel Robin et al,
KILBURN & STRODE 30 John Street
London WC1N 2DD(GB)

(54) Racks for nuclear fuel elements.

(57) A rack for nuclear fuel elements includes an outer container 36 within which is a plate assembly comprising a plurality of first plates 16, 10 of boron steel extending substantially parallel to one another and a plurality of second plates 18, 10 of boron steel extending substantially parallel to one another but substantially perpendicular to the first plates. The first and second plates together define a plurality of substantially rectangular section cavities, each of which is adapted to receive a nuclear fuel element. Each pair of first and second plates which together partially define one of the cavities is either integral or mechanically interlocked by a plurality of projections on the edge of one of the plates which extend into corresponding apertures in the other plate. The outer container engages the plate assembly and thereby retains the plates in their relative positions and imparts rigidity and mechanical strength to the assembly.

Fig. 6.

Croydon Printing Company Ltd

## RACKS FOR NUCLEAR FUEL ELEMENTS

The present invention relates to racks for nuclear fuel elements and is particularly concerned with such racks for elements for a pressurised water reactor (PWR) but is also applicable to racks for elements for an advanced gas cooled reactor (AGR).

When nuclear fuel elements are spent they are removed from the reactor core and replaced with fresh ones. Such spent elements contain traces of highly radioactive short half-life compounds and are therefore conventionally left for some weeks in a storage pond to allow these compounds substantially to decay and they are then removed from the pond and transported to the place where they are ultimately to be stored or reprocessed.

When being stored or transported, fuel elements are accommodated in racks which have a plurality of elongate cavities, generally of rectangular section. Such racks have three main functions of which the first is simply to hold a number of fuel elements together, typically fourteen, so as to facilitate their handling and the second is to absorb a large proportion of the neutron radiation which is emitted by such fuel elements. In order to fulfill the latter function such racks invariably incorporate boron which has the well known property of absorbing neutrons.

For environmental and safety reasons such racks are subject to stringent government regulations to ensure that when they are in a storage pond or being transported they can withstand massive shock loads such as would be sustained if they were to undergo, for instance, a direct aircraft strike or a major accident during transport. Thus whilst such racks are generally subject to relatively low static loads they must nevertheless be extremely rigidly constructed to withstand potentially massive dynamic loads whilst still being capable of absorbing substantial intensities of neutron radiation. For this reason such transport racks are conventionally accommodated within an outer container, typically of cylindrical shape, which both protects the racks and imparts additional·mechanical stability to them.

One form of rack which has been widely used in the United Kingdom comprises a plurality of individual rectangular section elongate containers, each of which comprises a single sheet of stainless steel which is folded three times along its length and its two free edges are then welded together. The required number of these containers are then manually interconnected by bolting or the like with inserts of boron/aluminium (Boral) composite between them to absorb the neutron radiation. The interconnected containers are then placed within an appropriately shaped aperture within a number of circular section baffle plates and the whole assembly is accommodated with an outer cylindrical stainless steel container whose inner surface engages the peripheries of the baffles which in turn engage and retain the containers. Such racks are extremely expensive because Boral is very expensive, because Boral is subject to corrosion and the inserts must thus be clad with a non-corrodible material, because the method of assembly of the containers is of necessity a time-consuming, manual and thus expensive operation and because the resultant rack is extremely heavy.

A further rack which has been used in continental Europe combines the support and neutron-absorption functions into the same elements by making the individual compartments from boron steel. This of course eliminates the problems which are associated specifically with the use of Boral but there is still a substantial assembly problem. Either the compartments may be connected manually thus introducing the difficulties and expense referred to above or they may be welded together. When welding boron steel the welded zone tends to become brittle and thus in such a welded rack the welded connections are quite satisfactory under the usual low static load but they tend to brittle fracture under a high dynamic load, that is to say under precisely those conditions where the high mechanical strength is required. The problem of brittle fracture is normally considered to be intolerable at those boron contents normally required satisfactorily to absorb the neutron radiation. Thus one is obliged either to use an expensive manual assembly method with compartments of boron steel of the required composition or to use a welding assembly method accepting that brittle fracture may occur under a high applied load.

Boron steel racks used for transporting (as opposed to storing) fuel elements have almost invariably been welded but welding is found to have the further disadvantage that manufacture is made more difficult as the distortion that occurs due to fabrication renders it impossible safely to insert the fuel elements into the compartments since the latter must be constructed so that the elements are a close fit within them along their length.  This necessitates elaborate and expensive precautions during welding to ensure that such warping is minimised.

Accordingly it is an object of the present invention to provide a rack for nuclear fuel elements which can be used for either storage or transport purposes and which is cheaper and simpler than previous racks whilst still exhibiting adequate mechanical strength to withstand the maximum dynamic load to which it may be subjected and adequate absorptivity of neutron radiation and it is a further object to provide such a rack with a construction which permits its neutron absorptivity to be selected without regard to its construction without being expensive to construct.

According to the present invention a rack for nuclear fuel elements includes an outer container within which is a plate assembly comprising a plurality of first plates of boron steel extending substantially parallel to one another and a plurality of second plates of boron steel extending substantially parallel to one another but substantially perpendicular to the first plates, the first and second plates together defining a plurality of substantially rectangular section cavities, each of which is adapted to receive a nuclear fuel element, each pair of first and second plates which together partially define one of the cavities being either integral or mechanically interlocked by a plurality of projections on the edge of one of the plates which extend into corresponding apertures in the other plate, the outer container engaging the plate assembly and thereby retaining the plates in their relative positions. Preferably those plates which are mechanically interlocked are not directly physically connected so that the plate assembly can be readily disassembled when it is not within the outer container. Preferably the projections are an integral part of and lie in the same plane as that plate on whose edge they are formed.

The present invention is based on the realisation that in all previous constructions it was incorrectly thought necessary to make each individual compartment strong so that the resultant rack would have the necessary strength and that in fact each compartment or indeed the entire plate assembly may be inherently mechanically unstable and that this is of no consequence provided the entire structure including the outer container has the necessary rigidity and strength. To put it in other words the invention utilises the fact which is known per se that it is possible to make a strong composite structure from a plurality of elements, each of which is individually relatively weak.

Those plates which are interlocked by means of the projections and apertures but are not physically connected are thus restrained from relative movement in two perpendicular directions only by the interlocking connection but restraint in the third mutually perpendicular direction which is the direction in which the projections extend can not be provided by the interlocking connection and is provided by direct or indirect engagement of the plate assembly with the outer container.

The rack in accordance with the invention does not require time-consuming connecting together by bolting or the like and the absence of any need for welding means that the boron content of the steel plates can be chosen to be the optimum, typically 1 to 2% by weight, without regard to the method of construction of the rack.

It will be appreciated that the rack may have a variety of different forms whilst still embodying the same inventive concept. In one form of the invention each cavity is defined by plates which do not partially define any other cavity so that each pair of adjacent cavities is separated by two plates. Each cavity may be defined by one panel so that all four of its plates are integral, three corners simply comprising bends in the panel and the fourth having an interlock between the two free edges of the panel. However, in one preferred construction each plate of each cavity is a separate unit interlocked along each of its two edges to a further plate. In this case the projections on each plate are preferably the same length and spaced apart by a distance equal to their length, the spaces between adjacent projections constituting apertures accommodating the projections of the adjacent plate. This will permit any plate to be interchangeable with any other plate and the most preferred construction, in which each plate has an even number of projections and apertures along each side, permits any plate to be used regardless of its specific orientation.

In a further form of the invention each adjacent pair of cavities is defined along their common side by a common plate. This will mean that each plate, except thosewhich define part of the outer surface of the plate assembly, partially defines two adjacent cavities. This opens up the possibility of making two or more adjacent coplanar plates integral and in this case the integral plates will afford a plurality of cavities along the or each line along which the perpendicular plates contact them, into which cavities the projections along the edge of the perpendicular plates extend.

Preferably all of one of the first plates or the second plates which are coplanar and adjacent are integral. It will be appreciated that for assembly reasons it is not possible for all those first plates and second plates which are coplanar to be integral, but if all of one set of plates are integral with those with which they are coplanar all those plates which lie in one of two planes, or more depending on the geometry of the rack, may be integral with those other plates with which they are coplanar.

It will be appreciated that it is desirable that the projections on each plate should not extend through the plate with which that plate is interlocked since this might interfere with the stacking of adjacent plates or the introduction of fuel elements into the cavities. For this reason the projections preferably extend from the plate on which they are formed by a distance which does not exceed the thickness of the plate with which that plate is mechanically interlocked.

As referred to above, the plate assembly is engaged by the outer container and it is this which clamps the plates together and ensures that they cooperate to form a rigid structure in the manner of a plurality of box girders whose side surfaces are braced against one another. The outer container may directly engage the plate assembly, either at discrete points or over its entire surface area by having a shape which corresponds to that of the plate assembly. Preferably, however, the rack includes two or more baffle plates having an aperture therein whose shape corresponds to that of the plate assembly and through which the plate assembly passes, the outer periphery of the baffle plates engaging the inner surface of the outer container. The outer container thus indirectly engages and is spaced from the plate assembly and this construction is found to be extremely rigid.

As mentioned above, the rack can be considered as a plurality of adjacent box girders and if the rack is to fail by buckling it is only the outer plates of the plate structure which are capable of buckling since the remaining plates are stabilised by an adjacent plate or a fuel element. Thus the rack preferably includes a plurality of restraint members, e.g. elongate metal profiles, connected to adjacent baffle plates and engaging the outer surface thereby tending to prevent buckling of the latter.

. Further features and details of the invention will be apparent from the following description of certain specific embodiments which is given by way of example with reference to the accompanying diagrammatic drawings, in which:-

Figure 1 is a plan view of a single plate for use in one construction of rack;

Figure 2 is a side view of the plate of Figure 1;

Figure 3 is an end elevation of the plate assembly of a second construction of rack;

Figure 4 is an end elevation of the plate assembly of a third construction of rack;

Figure 5 is a scrap sectional view on the line A-A in Figure 3 and Figure 4;

Figure 6 is an end view of a transport rack incorporating the plate assembly of Figure 4 within an outer container.

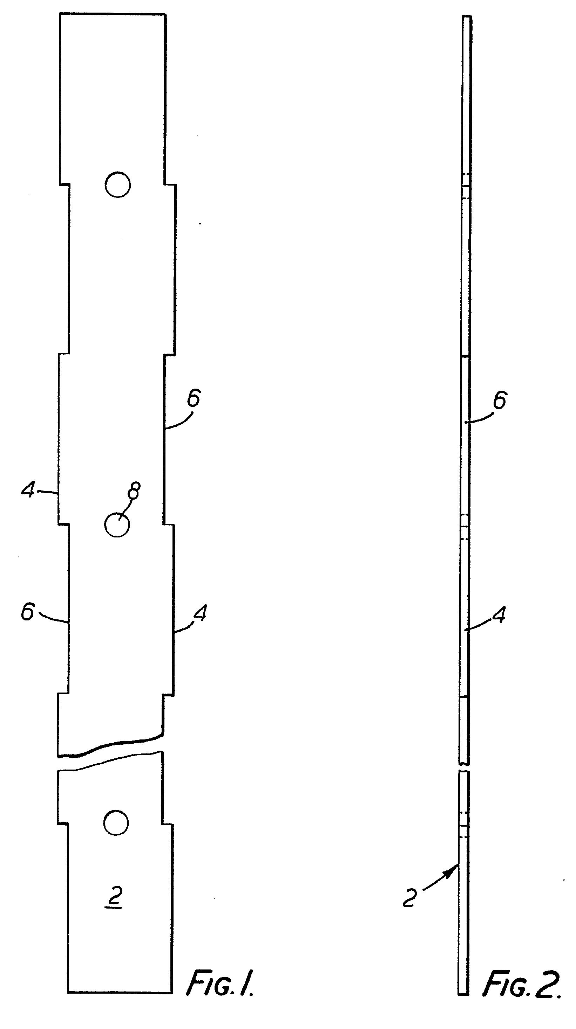

Referring firstly to Figures 1 and 2, the plate 2 is formed of boron steel, containing e.g. 1.2% boron, and typically has a length of about 5 metres, a nominal width of about 14 cm and a thickness of about 6 mm. Such a plate may be manufactured as a continuous strip and then cut to length. On one side it has a number, typically 4, of integral projections 4 of equal length which extend about 5 mm from the edge of the plate and are spaced apart by a distance equal to the length thus effectively defining recesses or apertures 6 between them. On the other side of the strip there are similar recesses and projections offset by one pitch so that each projection is opposite a recess and vice versa.

A transport rack is assembled from a plurality of such plates by placing a square section former over one plate and placing a further such plate on each side of the former such that their projections extend into the recesses in the lower plate and the projections on the lower plate extend into the recesses in the side plates, thereby interlocking all three plates. A top plate is then positioned on top of the former and interlocked with the side plates in a manner similar to the bottom. Adhesive tape or a strap is then placed around the assembly to retain the plates in position and the whole assembly is then placed through an aperture in two or more spaced circular section steel baffle plates positioned within a hollow cylindrical stainless steel container. The tape is removed and the process is then repeated. The apertures in the baffle plates are shaped to correspond exactly to the outer shape of the desired plate assembly so that when all the series of four plates have been inserted into the baffle plate the plate assembly is firmly engaged around its periphery by the baffle plates. The formers are then removed.

Despite the fact that each sub-assembly of four plates has no inherent mechanical stability on its own, and would indeed fall apart if it were not for the adhesive tape, the entire assembly is extremely rigid and stable since no relative movement of the plates is possible and the plate assembly thus acts as a series of adjacent box girders, despite the fact that the plates are not physically interconnected.

After insertion of fuel elements into a transport rack the outer container is closed by two end plates. If the rack is to be used for storage purposes, the plate assembly is placed within a container whose primary purpose is to brace the assembly and retain the plates in their relative positions. Each plate is provided with a number of apertures 8 to allow the free passage of water which is present, in use, in the outer container to conduct away the heat generated by the fuel elements.

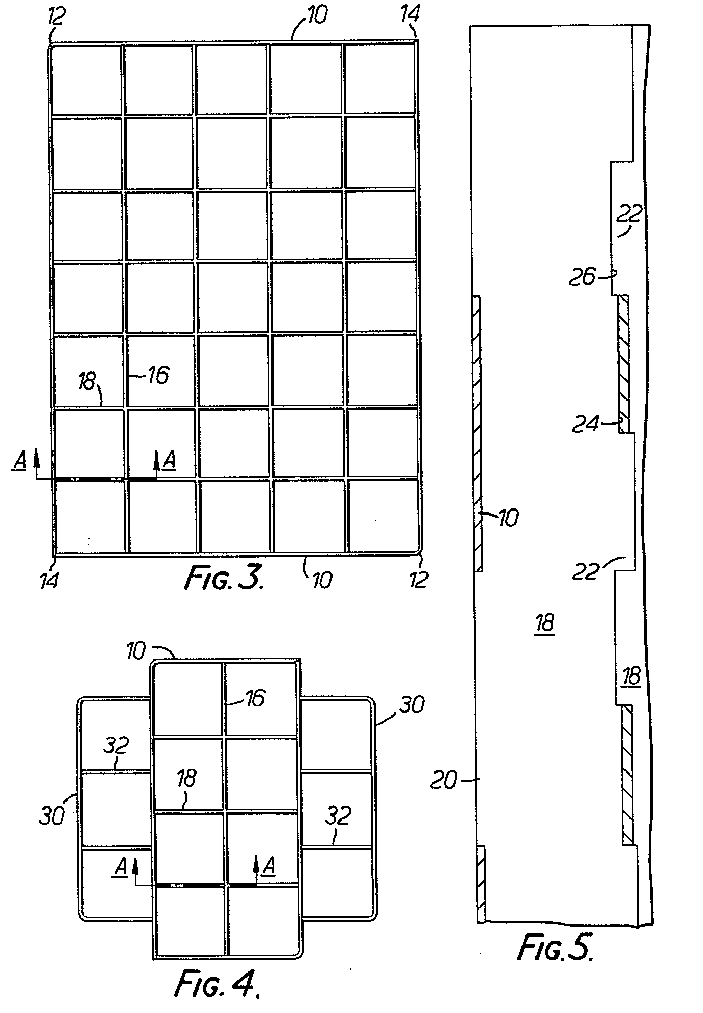

Figure 3 shows the entire plate assembly of a different construction of rack, for pond storage of elements, having a total of thirty-five cavities. The outer surface of the plate assembly is constituted by two plates 10 extending the full length of the plate assembly, each of which is bent at 12 to form two right angled corners of the rack, the other two corners 14 being constituted by the free edges of the plates 10 which interlock in a manner similar to that described in connection with Figures 1 and 2. The rectangular space within the plates 10 is traversed by four spaced continuous vertical plates 16, each of which and each vertical limb of the plates 10 being provided with 6 spaced horizontally extending rows of apertures.  Each space defined by the plates 16 or a plate 16 and a plate 10 is traversed by six spaced horizontal plates 18 provided with projections which extend into the apertures in the plates 10 and 18.

As may be seen in more detail in Figure 5, each edge of a plate 18 which is to interlock with a plate 10 is provided with a plurality of projections 20 which extend into the apertures in the wall 10.  The recesses or apertures between the projections 20 are occupied by the material of the plate 10 between the apertures formed in it.  Each edge of a plate 18 which is to interlock with a vertical plate 16 is provided with a plurality of projections 22.  The projections 22 define recesses between them each of which is stepped so as to have a shallow portion 24 and a deeper portion 26 of equal length to the portion 24.  As may be seen, two coplanar plates 18 interlock both with each other and with an intervening vertical plate 16.  The projections 22 on each plate 18 fit exactly into the deeper portion 26 of a recess between two projections 22 on the adjacent plate 18 whilst the shallower portions 24 together define a gap which is occupied by the material of the vertical plate 16 between the recesses formed in it.

Thus all the plates are interlocked together and whilst the plate assembly may have relatively little mechanical stability on its own the restraint provided by the outer container ensures that the entire rack is extremely rigid.

This form of interlocking may also be used in

**0080894**

a transport rack as shown in Figure 4. The construction shown in this Figure may be considered as having a central portion affording eight cavities on each side of which there are a further three cavities vertically offset from the cavities in the central portion. The central portion is constructed in a manner similar to that of the rack of Figure 3 and comprises two outer plates 10, a continuous vertical plate 16 and three separate interlocking horizontal plates 18. Connected to the vertical limb of each plate 10 is a plate 30 bent into a rectangular U shape having projections at the free ends of its limbs which extend into apertures within the plate 10. The space within each plate 30 is traversed by two horizontal plates 32 whose edges have projections which extend into apertures in the plates 30 and 10.

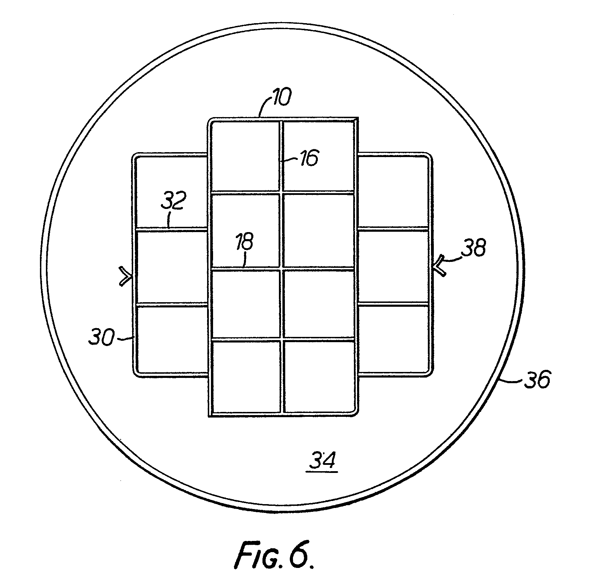

The plate assemblies of Figures 3 and 4 are both accommodated in an outer container and are preferably engaged and retained therein by two or more baffle plates. Figure 6 shows the assembly of Figure 4 accommodated in an appropriately shaped aperture in two or more spaced, circular baffle plates 34 of stainless steel. The periphery of each baffle plate engages the interior surface of a hollow cylindrical outer container 36. A number, in this case two, angular restraint brackets 38 are welded between adjacent baffle plates 34 in such positions that they just contact the outer surface of the plate assembly and thus tend to restrain buckling of the latter thereby increasing its rigidity.

It will be appreciated that a great many modifications may be made to the constructions described above and that these may be altered or combined as required and that the number of plates which are integral and the number and disposition of the projections and apertures may be varied in any manner that is compatible with producing a mechanically coherent structure. These decisions and decisions relating to the thickness and boron content of the steel plates may however be made on the basis of the mechanical strength and radiation absorptivity required without being constrained by the construction and method of assembly of the rack.

CLAIMS

1. A rack for nuclear fuel elements including an outer container (36) within which is a plate assembly comprising a plurality of first plates (16,10) of boron steel extending substantially parallel to one another and a plurality of second plates (18,10) of boron steel extending substantially parallel to one another but substantially perpendicular to the first plates (16,10), the first and second plates together defining a plurality of substantially rectangular section cavities, each of which is adapted to receive a nuclear fuel element, characterised in that each pair of first and second plates (10,16,18) which together partially define one of the cavities are either integral or mechanically interlocked by a plurality of projections (20,22) on the edge of one of the plates (18) which extend into corresponding apertures in the other plate (10,16), the outer container (36) engaging the plate assembly and thereby retaining the plates in their relative positions.

2. A rack as claimed in Claim 1 characterised in that those plates which are mechanically interlocked are not directly physically connected.

3. A rack as claimed in Claim 1 or Claim 2 characterised in that the projections are a part of and lie in the same plane as that plate on which they are formed.

4. A rack as claimed in any one of Claims 1 to 3 characterised in that each cavity is defined by plates (2) which do not partially define any other cavity.

5. A rack as claimed in Claim 3 characterised in that each plate (2) of each cavity is separate and mechanically interlocked along each of its two edges to a further plate.

6. A rack as claimed in Claim 5 characterised in that the projections (4) on each plate (2) are of the same length and spaced apart by a distance equal to their length, the spaces between adjacent projections (4) constituting apertures (6) accommodating the projections (4) of the adjacent plate.

7. A rack as claimed in any one of Claims 1 to 3 characterised in that each adjacent pair of cavities is defined along their common side by a common plate.

8. A rack as claimed in Claim 7 characterised in that two or more coplanar plates (16) are integral and afford a plurality of apertures along the line along which the perpendicular plates (18) contact them into which the projections (22) along the edge of the perpendicular plates (18) extend.

9. A rack as claimed in Claim 7 or Claim 8 characterised in that all of one of the first plates or the second plates which are coplanar and adjacent are integral.

10. A rack as claimed in Claim 9 characterised in that those plates (10) of the other of the first plates and the second plates which lie in one of two planes are integral with those plates with which they are coplanar.

11. A rack as claimed in any one of the preceding claims characterised in that the projections extend from the plate on which they are formed by a distance which does not exceed the thickness of the plate with which that plate is mechanically interlocked.

12. A rack as claimed in any one of the preceding claims characterised by two or more baffle plates (34) having an aperture therein whose shape corresponds to that of the plate assembly and through which the plate assembly passes, the outer periphery of the baffle plates (34) engaging the inner surface of the outer container (36).

13. A rack as claimed in Claim 12 characterised by a plurality of restraint members (38) connected to adjacent baffle plates (34) and engaging the outer surface of the plate assembly thereby tending to prevent buckling of the latter.

0080894

1/3

FIG.1.

FIG.2.

2/3

0080894

FIG. 3.

FIG. 4.

FIG. 5.

Fig. 6.